# EUROPEAN PATENT APPLICATION

(11) **EP 4 512 936 A1**
(43) Date of publication of application: **26.02.2025**
(21) Application number: 24189689.3
(22) Date of filing: 19.07.2024
(51) Int. Cl.: C25D 5/02, C25D 7/00, C25D 7/04, C25D 3/04

(54) **METHOD FOR CHROME PLATING A DISPENSING UNIT**

(30) Priority: 07.08.2023 IT 202300016896
(71) Applicant: LELIT S.R.L., 25045 Castegnato (Brescia) (IT)
(72) Inventor: EPIS, Giorgio, I-25045 Castegnato, BRESCIA (IT); EPIS, Mauro, I-25045 Castegnato, BRESCIA (IT)
(74) Representative: Chimini, Francesco

(57) **Abstract**

The present invention relates to a method for chrome plating a dispensing unit (1), wherein such dispensing unit (1) comprises a fluid shut-off unit (2) and a body (3) .

The fluid shut-off unit (2) comprises an insert (20) which in turn comprises a sleeve (21) and a head (22) . Furthermore, the insert (20) is made as one piece.

The body (3) is delimited by an outer surface (30), and internally a fluidic circuit (31) is obtained for the passage of an infusion fluid. Furthermore, a plurality of openings (32) is also formed in the body (3), which place the fluidic circuit (31) in communication with the outside. The method provides for providing the dispensing unit (1), a hollow cap (4) and a plurality of closing caps (5) in a number equal to the plurality of openings (32) .

After covering the sleeve (21) with the hollow cap (4) and applying the plurality of closing caps (5) to the plurality of openings (32), the insert (20) and the body (3) are chrome plated so that only the head (22) and the outer surface (30) are chrome plated. [Fig. 1]

## Description

The present invention is in the technical sector of machines for dispensing infusion beverages, for example coffee, tea, chamomile or herbal tea; in particular the present invention relates to a method for the chrome plating of a dispensing unit of a machine. The present invention also relates to a dispensing unit that may be obtained using the aforesaid method and a kit to be subjected to chrome plating.

According to the state of the art, machines for dispensing coffee-based infusion beverages comprise a dispensing unit known to a person skilled in the art under the name of E61 unit or L58E unit.

The dispensing unit is traditionally made of a material belonging to the brass family, preferably a copper and zinc alloy with traces of lead. Once manufactured, the dispensing unit is subjected to chrome plating, namely an electrodeposition process which allows a coating of chromium to be obtained on the metal substrate of the dispensing unit. In this case, the electrodeposition process is obtained by immersing the dispensing unit in an electrolytic bath comprising chromium trioxide and/or chromic acid. The dispensing unit acts as a cathode, while a graphite (or inert metal) electrode is configured as an anode. Using a current generator, a voltage difference is applied between the anode (positively charged) and the cathode (negatively charged), whereby metal cations are deposited upon the dispensing unit forming a layer with a thickness of between 0.5 and 20 microns.

In addition to aesthetic reasons, the dispensing unit is also subjected to chrome plating in order to improve corrosion resistance and in order to surface-harden the metallic substrate.

Disadvantageously, the electrodeposition process results in the formation of a layer of chromium over the entire surface of the dispensing unit, also within those inner chambers that define the fluidic circuit for the passage of an infusion fluid, for example water. It has been observed experimentally that due to the presence of chlorides, magnesium, and other elements/compounds within the infusion fluid, the layer of chromium is over time progressively removed. The chromium that is removed is thus mixed with the infusion fluid and participates in the infusion of the beverage. Insofar as it is obtained using an infusion fluid containing chromium, it follows that the infused beverage dispensed by the machine is toxic.

In document DE102010013066B4, filed in the name of ECM Espresso Coffee Machines Manufacture GmbH, a partial solution to the problem was suggested consisting in constructing the fluid shut-off unit of the dispensing unit in separate elements. Contrary to the prior art, in DE102010013066B4 the sleeve and the head of the fluid shut-off unit are made separately and are only subsequently assembled. In this way, insofar as the sleeve, unlike the head, is in contact with the infusion fluid during operation of the machine, it is possible to chrome plate only the head.

However, DE102010013066B4 only solves the problem of chrome plating the fluid shut-off unit but does not consider the disadvantages of chrome plating the other components of the dispensing unit.

The object of the present invention is to propose a chrome plating method, a dispensing unit and a kit to be subjected to chrome plating that is capable of at least partially overcoming the drawbacks mentioned above.

Said object is achieved using a method for chrome plating a dispensing unit according to claim 1, with a dispensing unit obtainable by the aforesaid method according to claim 8, and with a chrome plating kit according to claim 10. The dependent claims describe preferred embodiments of the invention.

The features and the advantages of the method, of the dispensing unit and of the kit according to the invention shall be made readily apparent from the following description of preferred embodiments thereof, provided purely by way of a non-limiting example, with reference to the accompanying figures, in which:

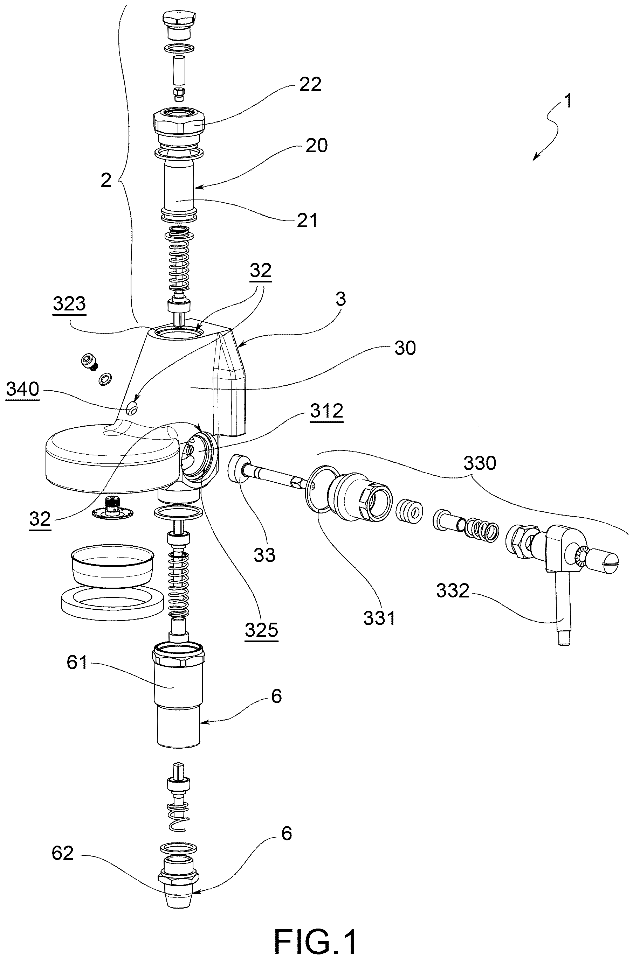

- Fig. 1 is a perspective exploded view of a dispensing unit;
- Fig. 2 is an enlargement of a portion of Fig. 1, showing a fluid shut-off unit;
- Fig. 3a is a perspective view of the fluid shut-off unit and a hollow cap engageable therebetween by means of a threaded coupling;
- Fig. 3b is a perspective view of the fluid shut-off unit and the hollow cap in a further embodiment, wherein the hollow cap is engageable under pressure - by means of calibrated interference - with the fluid shut-off unit;

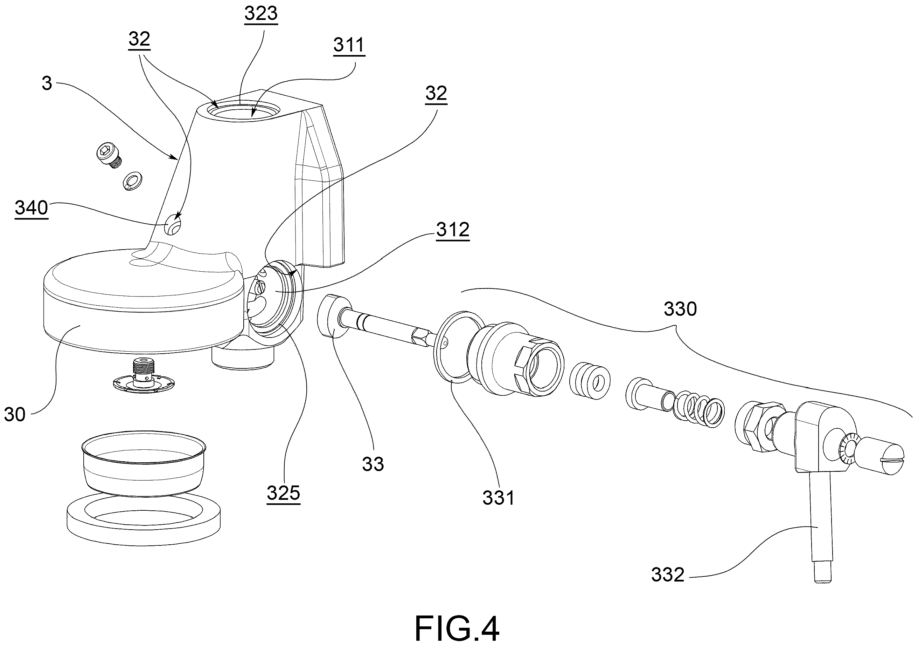

- Fig. 4 is an enlargement of a portion of Fig. 1, showing the body of the dispensing unit;
- Fig. 5 is a perspective view in separate components of the body and of a plurality of closing caps;
- Fig. 6 is a cross-sectional perspective view of the body engaged with the plurality of closing caps;
- Fig. 7 is an enlargement of a portion of Fig. 1, where a tang is shown;
- Fig. 8 is an exploded perspective view of the dispensing unit in a further embodiment; and
- Fig. 9 is an enlargement of a portion of Fig. 8.

In the following description, elements common to the various embodiments represented in the drawings are indicated with the same reference numerals.

In one general embodiment, according to the invention in the entirety thereof, a method for chrome plating a dispensing unit 1, for example of the E61 type, is proposed. In particular, the dispensing unit 1 is suitable for dispensing an infused beverage, such as tea, chamomile, herbal tea, or a coffee-based beverage.

Such dispensing unit 1 comprises a fluid shut-off unit 2 and a body 3.

The fluid shut-off unit 2 comprises an insert 20, and the insert 20 in turn comprises a sleeve 21 and a head 22.

The sleeve 21 is suitable for coming into contact with an infusion fluid, whereas the head 22 protrudes axially from one end 21' of the sleeve 21.

The head 22 is preferably mushroom-shaped.

Furthermore, the insert 20 is made as one piece.

The body 3 is delimited by an outer surface 30 to be subjected to chrome plating.

A fluidic circuit 31 for the passage of the infusion fluid is formed inside the body 3. A plurality of openings 32 is also formed in the body 3 so as to place the fluidic circuit 31 in communication with the outside. In other words, by means of the plurality of openings 32, the inside of the body 3, i.e. the fluidic circuit 31, communicates with the outside, i.e. with the outer surface 30.

In carrying out the method, the following are envisaged:
- providing the dispensing unit 1;
- providing a hollow cap 4;
- engaging the hollow cap 4 with the insert 20, so as to cover the sleeve 21 and leave the head 22 exposed;
- providing a plurality of closing caps 5 in a number equal to the plurality of openings 32, each closing cap of such plurality of closing caps 5 being engageable with a respective opening of such plurality of openings 32;
- applying each closing cap to the respective opening so as to internally isolate the fluidic circuit 31 from the outer surface 30 of the body 3;
- chrome plating the insert 20 and the body 3, so that only the head 22 and the outer surface 30 are chrome plated.

Preferably, once executed, the method also provides for removing the hollow cap 4 and the plurality of closing caps 5.

In one embodiment, the insert 20 extends predominantly along an insertion axis A.

Preferably, the insert 20 is made in one piece and consists only of a sleeve 21, possibly provided with a collar 23 and head 22.

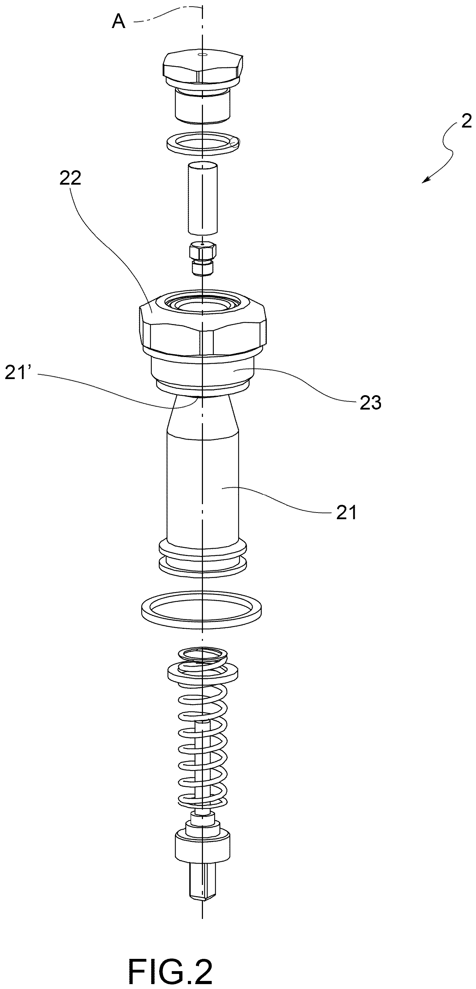

According to one embodiment in accordance with the accompanying Fig. 2, the end 21' of the sleeve 21 is provided with a collar 23. In other words, the collar 23 is formed at the end 21', and the head 22 protrudes axially from the collar 23.

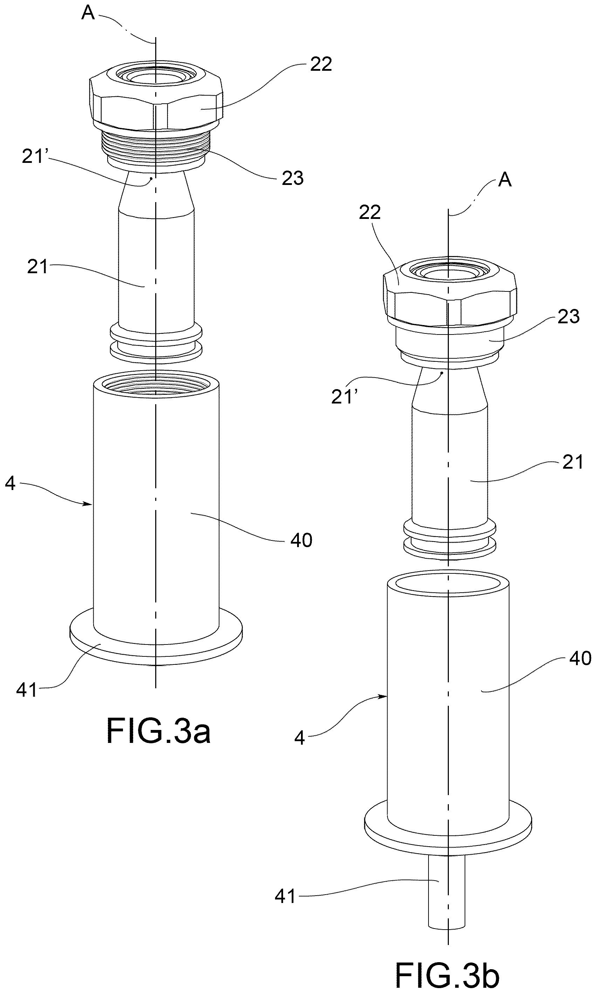

According to what shown in the accompanying Fig. 3a and 3b, the hollow cap 4 comprises an elongated portion 40 with a hollow cylindrical shape. Furthermore, the hollow cap 4 also comprises a handgrip 41 arranged to close the elongated portion 40, so as to facilitate the movement of the hollow cap 4 by a user.

Preferably, the method further provides for engaging the elongated portion 40 on the collar 23.

According to one embodiment, the engagement between the collar 23 and the elongated portion 40 is a shape and/or force coupling, preferably a threaded coupling. In the present case, in Fig. 3a, the collar 23 is externally threaded and the elongated portion 40 is internally threaded so that the elongated portion 40 may be screwed onto the collar 23. On the other hand, in Fig. 3b, the elongated portion 40 is engageable by pressure by means of calibrated interference with the collar 23.

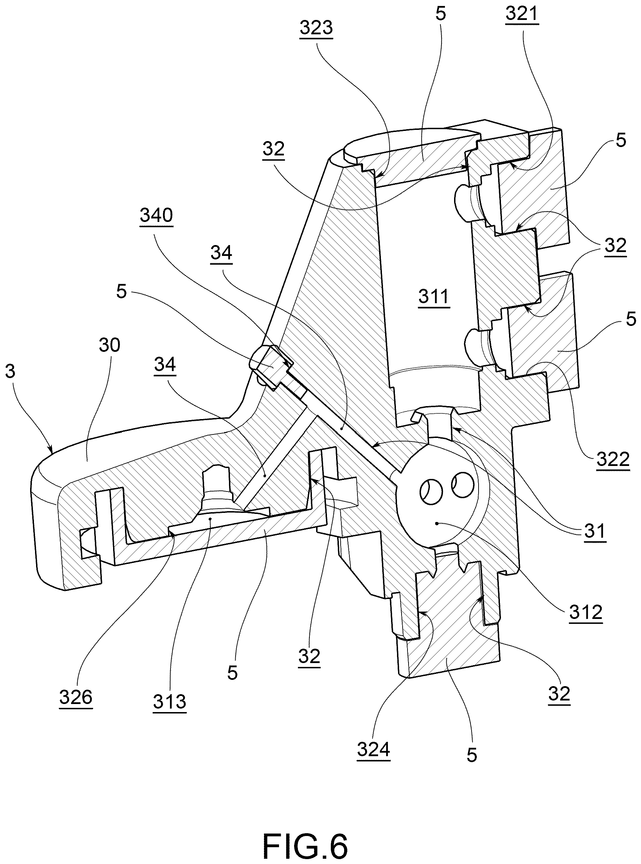

According to one embodiment shown in Fig. 6, a first chamber 311 for the inlet and outlet of the infusion fluid, a second chamber 312 in fluidic communication with the first chamber 311, and a third chamber 313 are formed within the body 3 for allowing the infusion fluid to wet a substance to be infused so as to dispense the corresponding infused beverage.

The first chamber 311 communicates with the outside by means of a fluid inlet opening 321, a fluid outlet opening 322 and an at least partially housed insert opening 323 suitable to at least partially accommodate the fluid shut-off unit 2.

The second chamber 312 is suitable for housing a cam 33 for diverting the flow of the infusion fluid towards the outside by means of a discharge opening 324 or towards an infusion duct 34. The cam 33 is insertable into the second chamber 312 through a chamber access opening 325.

The third chamber 313 is fluidically connected to the second chamber 312 by means of the infusion duct 34 and has a dispensing opening 326 suitable to be engaged by a filter holder.

Preferably, the method further provides for engaging the fluid inlet opening 321, the fluid outlet opening 322, the at least partially housed insert opening 323, the discharge opening 324, the chamber access opening 325 and the dispensing opening 326 with the plurality of closing caps 5.

According to one embodiment, the fluidic circuit 31 comprises the first chamber 311, the second chamber 312, the third chamber 313 and the infusion duct 34.

Preferably, the cam 33 is operable by cam sealing and movement means 330 that engage with the chamber access opening 325 and prevent the infusion fluid from escaping from the second chamber 312 when the machine is operating. In detail, the cam sealing and movement means 330 comprise at least one gasket 331 and a lever 332.

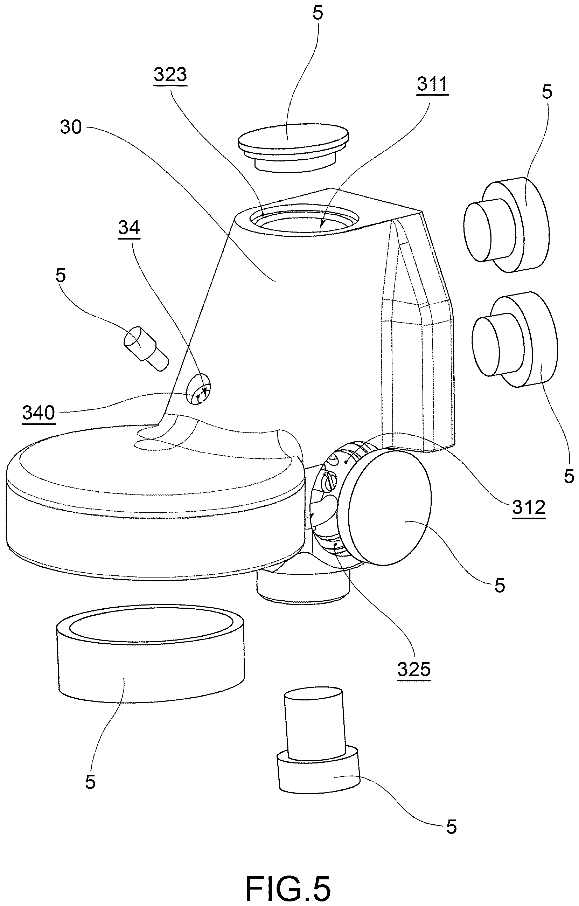

According to one embodiment shown in the accompanying Fig. 5 and 6, the infusion duct 34 is provided with a hole 340 open towards the outside and obtained when manufacturing the infusion duct 34. The method further provides for engaging such hole 340 with a respective closing cap of the plurality of closing caps 5.

In particular, for the machining of the infusion duct 34 it is necessary to make the hole 340 using a machining tool.

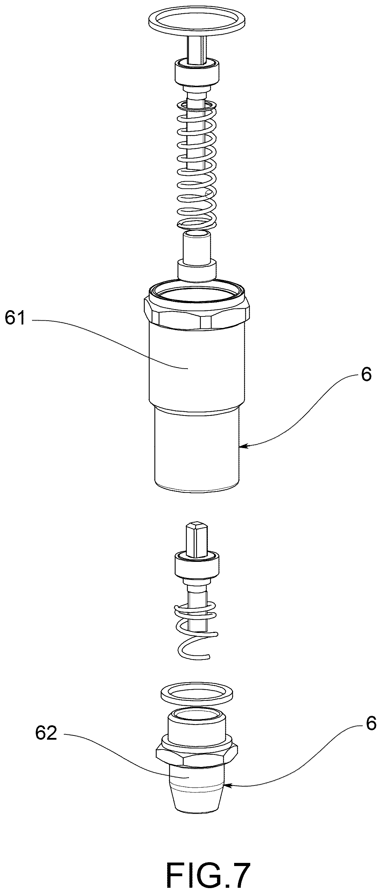

According to the embodiment shown in Fig. 7, the dispensing unit 1 also comprises a tang 6 engageable with the body 3 and suitable for discharging the infusion fluid. In this case, by means of the tang 6, the discharge/drainage of the infusion fluid makes it possible to reduce the pressure inside the body 3 and/or to remove the presence of stagnant infusion fluid. Preferably, the method further provides for chrome plating of such tang 6.

In particular, the tang 6 comprises, preferably consists of, a tubular portion 61 and a discharge fitting 62 engaged therebetween. Furthermore, the tang 6 - preferably the tubular portion 61 - engages the body 3 through the discharge opening 324.

Insofar as the tang 6 is suitable for discharging the infusion fluid in the case of overpressure and/or stagnation, it is evident that the infusion fluid passing through the tang 6 does not contribute in any way to the dispensing of the infused beverage, i.e., it does not wet the substance to be infused. Insofar as it is only suitable for discharging the infusion fluid, the tang 6 is chrome plated both internally and externally.

Preferably, the integral chrome plating, i.e. both inside and outside, affects only the tubular portion 61 and the discharge fitting 62. By completely chrome plating the tang 6 it is not necessary for the method to provide for the use of additional covers adapted to isolate the inside of the tang 6 from the outside; the chrome plating of the tang 6 is therefore extremely simple. Furthermore, even if chromium residues were also to contaminate the infusion fluid passing through the tang 6, such infusion fluid would simply be discharged and would not contribute to the dispensing, and thus to the contamination, of the infused beverage.

In one embodiment of the method, the step of chrome plating the outer surface 30 and the head 22 comprises electrodepositing a chromium coating onto the outer surface 30 of the body 3 and onto the head 22 of the insert 20.

The outer surface 30 and the head 22 act as a cathode and are immersed in an electrolytic bath comprising chromium trioxide and/or chromic acid.

In addition to the cathode, an electrode is also envisaged, for example made of antimonious lead or graphite, which acts as an anode and which is immersed in the electrolytic bath.

Finally, by applying a voltage difference between the cathode and the anode, chromium cations are deposited on the outer surface 30 and on the head 22 thus forming the chromium coating.

It should be noted that the chrome plating of the outer surface 30 and of the head 22 may be simultaneous or performed in succession to each other.

According to one aspect of the present invention, a dispensing unit 1 obtainable using the chrome plating method described above is also proposed.

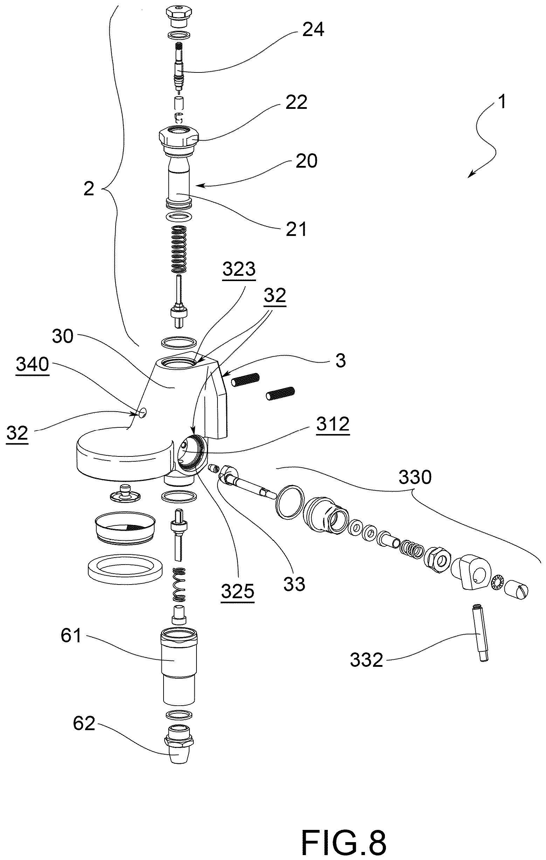

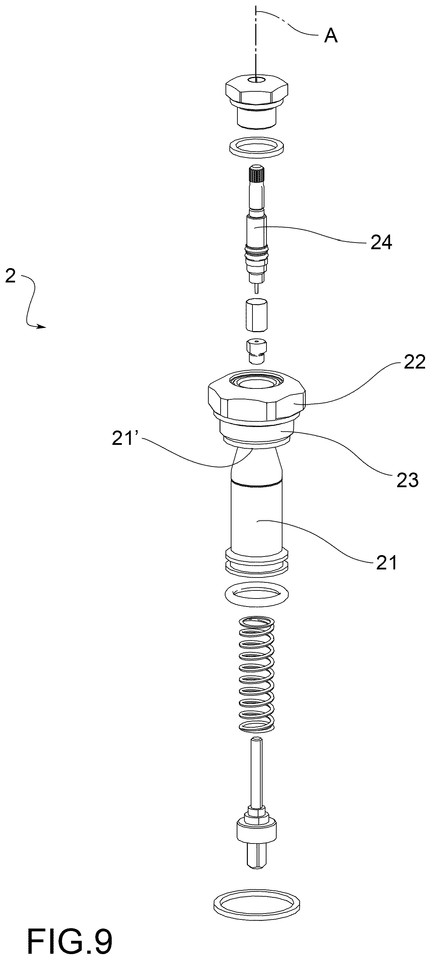

In the further embodiment of the dispensing unit 1 shown in the accompanying Fig. 8 and 9, the fluid shut-off unit 2 also comprises a valve element 24 adapted to regulate the flow of the infusion fluid. Preferably, such valve element 24 is configured as a flow adjusting needle.

According to a further aspect of the present invention, a chrome plating kit is also proposed which comprises the dispensing unit 1, the hollow cap 4 and the plurality of closing caps 5.

The dispensing unit 1 comprises the fluid shut-off unit 2 and the body 3.

The fluid shut-off unit 2 comprises the insert 20, and the insert 20 in turn comprises the sleeve 21 - suitable for coming into contact with the infusion fluid - and the head 22 protruding axially from the end 21' of the sleeve 21. Furthermore, the insert 20 is made as one piece.

The body 3 is delimited by the outer surface 30, which is suitable for being chrome plated. The fluidic circuit 31 for the passage of the infusion fluid is formed internally within the body 3; furthermore, the plurality of openings 32 is formed within the body 3, which places the fluidic circuit 31 in communication with the outside.

The hollow cap 4 is engageable with the sleeve 21 so as to cover the sleeve 21 and leave only the head 22 exposed.

The plurality of closing caps 5 is in a number equal to the plurality of openings 32, where each closing cap of such plurality of closing caps 5 is engageable with a respective opening of such plurality of openings 32.

Preferably, the fluid shut-off unit 2 also comprises the valve element 24 which is suitable for regulating the flow of infusion fluid.

According to one embodiment, the end 21' of the sleeve 21 is provided with a collar 23. On the other hand, the hollow cap 4 comprises an elongated portion 40 with a hollow cylindrical shape. The engagement between the collar 23 and the elongated portion 40 is a shape and/or force coupling, preferably a threaded coupling.

According to one embodiment, the hollow cap 4 and the plurality of closing caps 5 are made of a material belonging to the polymer family.

Alternatively, the hollow cap 4 and/or the plurality of closing caps 5 are made of a material belonging to the metal family.

According to one aspect of the invention, a machine is also proposed for dispensing an infused beverage, such as tea, chamomile, herbal tea or coffee-based beverage. Such machine comprises the dispensing unit 1.

Innovatively, the method, the dispensing unit and the kit that form the subject matter of the present invention fulfill the proposed object.

Advantageously, the method of the present invention makes it possible to obtain a dispensing unit wherein the head and the outer surface are chrome plated. The chrome plating affects therefore those portions of the dispensing unit that are not suitable for coming into contact with the infusion fluid. On the other hand, the portions of the dispensing unit that are suitable for coming into contact with the infusion fluid, which flow makes it possible to wet the substance to be infused and to dispense the beverage, are not chrome plated.

According to one advantageous aspect, carrying out the method according to the present invention makes it possible to isolate the inside, i.e. the fluidic circuit, from the outside of the body, i.e. from the outer surface. The isolation of the inside from the outside is due to the engagement of each closing cap with the respective opening of the plurality of openings.

According to a still further advantageous aspect, the method provides for chrome plating the tang both internally and externally without providing for covering that would isolate the inside of the tang from the outside. The chrome plating of the tang is therefore extremely simple and inexpensive.

In order to meet contingent needs, a person skilled in the art may make modifications and adaptations to the method, the dispensing unit and the kit according to the invention, and may replace elements with other functionally equivalent elements without departing from the scope of the following claims. Each of the features described as belonging to a possible embodiment may be obtained independently in the other described embodiments.

## Claims

1. A method for chrome plating a dispensing unit (1), for example of the E61 type, wherein the dispensing unit (1) comprises:
i) a fluid shut-off unit (2) comprising an insert (20), said insert (20) comprising a sleeve (21) suitable to come into contact with an infusion fluid, and a head (22) axially protruding from an end (21') of the sleeve (21), said insert (20) being also made in one piece,
ii) a body (3) delimited by an outer surface (30) to be chrome plated, a fluidic circuit (31) being obtained inside said body (3) for the infusion fluid to pass, a plurality of openings (32) being also obtained in the body (3) to put the fluidic circuit (31) in communication with the outside,
wherein the method comprises the following steps:
- providing the dispensing unit (1);
- providing a hollow cap (4);
- engaging the hollow cap (4) with the insert (20), so as to cover the sleeve (21) and leave the head (22) exposed;
- providing a plurality of closing caps (5) in a number equal to the plurality of openings (32), each closing cap of said plurality of closing caps (5) being engageable with a respective opening of said plurality of openings (32);
- applying each closing cap to the respective opening, so as to internally isolate the fluidic circuit (31) from the outer surface (30) of the body (3);
- chrome plating the insert (20) and the body (3), so that only the head (22) and the outer surface (30) are chrome plated.

2. A method according to the preceding claim, wherein the end (21') of the sleeve (21) is provided with a collar (23), and wherein the hollow cap (4) comprises an elongated portion (40) with a hollow cylindrical shape, the method further including the engagement of the elongated portion (40) with the collar (23).

3. A method according to the preceding claim, wherein the engagement between the collar (23) and the elongated portion (40) is a shape and/or force coupling, preferably it is a threaded coupling.

4. A method according to any one of the preceding claims, wherein in the body (3) there are obtained:
- a first chamber (311) for the infusion fluid to enter and escape, said first chamber (311) communicating with the outside by means of a fluid inlet opening (321), a fluid outlet opening (322), and an at least partially housed insert opening (323) suitable to accommodate the fluid shut-off unit (2) at least partially,
- a second chamber (312) in fluidic communication with the first chamber (311), said second chamber (312) being suitable to house a cam (33) to divert the flow of the infusion fluid towards the outside by means of a discharge opening (324) or towards an infusion duct (34), the cam (33) being insertable into the second chamber (312) through a chamber access opening (325),
- a third chamber (313) to allow the infusion fluid to wet a substance to be infused so as to dispense a beverage, said third chamber (313) being fluidically connected to the second chamber (312) by means of the infusion duct (34) and having a dispensing opening (326) suitable to be engaged by a filter holder,
wherein the method includes engaging the fluid inlet opening (321), the fluid outlet opening (322), the at least partially housed insert opening (323), the discharge opening (324), the chamber access opening (325), and the dispensing opening (326) with the plurality of closing caps (5).

5. A method according to the preceding claim, wherein the infusion duct (34) is provided with a hole (340) open towards the outside and obtained when manufacturing the infusion duct (34), the method further including the engagement of said hole (340) with a respective closing cap of the plurality of closing caps (5).

6. A method according to any one of the preceding claims, wherein the dispensing unit (1) also comprises a tang (6) engageable with the body (3) and suitable to discharge the infusion fluid to reduce the pressure inside the body (3) and/or to remove the presence of stagnant infusion fluid, the method further including the chrome plating of said tang (6).

7. A method according to any one of the preceding claims, wherein the step of chrome plating the outer surface (30) and the head (22) comprises electrodepositing a chromium coating onto the outer surface (30) of the body (3) and onto the head (22) of the insert (20), wherein:
- the outer surface (30) and the head (22) act as a cathode and are immersed in an electrolytic bath comprising chromium trioxide and/or chromic acid,
- an electrode, for example made of antimonial lead or graphite, acts as an anode and is immersed in the electrolytic bath,
- by applying a voltage difference between cathode and anode, the chromium cations are deposited on the outer surface (30) and the head (22), thus forming the chromium coating.

8. A dispensing unit (1) obtainable by a method according to any one of the preceding claims.

9. A dispensing unit (1) according to the preceding claim, wherein the fluid shut-off unit (2) further comprises a valve element (24) suitable to adjust the flow of the infusion fluid, preferably said valve element (24) is configured as a flow adjusting needle.

10. A chrome plating kit comprising:
- a dispensing unit (1) comprising:
i) a fluid shut-off unit (2) comprising an insert (20), said insert (20) comprising a sleeve (21) suitable to come into contact with an infusion fluid, and a head (22) axially protruding from an end (21') of the sleeve (21), said insert (20) being also made in one piece,
ii) a body (3) delimited by an outer surface (30) to be chrome plated, a fluidic circuit (31) being obtained inside said body (3) for the infusion fluid to pass, a plurality of openings (32) being also obtained in the body (3) to put the fluidic circuit (31) in communication with the outside,
- a hollow cap (4) engageable with the sleeve (21), so as to cover said sleeve (21) and leave only the head (22) exposed;
- a plurality of closing caps (5) in a number equal to the plurality of openings (32), each closing cap of said plurality of closing caps (5) being engageable with a respective opening of said plurality of openings (32).

11. A kit according to the preceding claim, wherein the end (21') of the sleeve (21) is provided with a collar (23), and wherein the hollow cap (4) comprises an elongated portion (40) with a hollow cylindrical shape, the engagement between the collar (23) and the elongated portion (40) being a shape and/or force coupling, preferably a threaded coupling.

12. A kit according to claim 10 or 11, wherein the hollow cap (4) and the plurality of closing caps (5) are made of a material belonging to the polymer family.
